# EUROPEAN PATENT SPECIFICATION

(11) **EP 3 178 684 B1**
(45) Date of publication and mention of the grant of the patent: **16.12.2020**
(21) Application number: 15830038.4
(22) Date of filing: 27.07.2015
(51) Int. Cl.: B60H 1/34, F24F 13/15, F24F 13/14

(54) **AIRFLOW DIRECTION ADJUSTMENT DEVICE**
LUFTAUSSTRÖMER
DISPOSITIF DE RÉGLAGE DE DIRECTION D'ÉCOULEMENT D'AIR

(30) Priority: 07.08.2014 JP 2014161435
(43) Date of publication of application: 14.06.2017
(73) Proprietor: Nifco Inc., Kanagawa 239-8560 (JP)
(72) Inventor: FUKAZAWA, Kuniyasu, Yokosuka-shi Kanagawa 239-8560 (JP)
(74) Representative: Dr. Gassner & Partner mbB
(86) International application number: PCT/JP2015/071264
(87) International publication number: WO 2016/021436

(56) References cited:
- EP-A2- 2 018 986
- JP-A- S5 911 914
- JP-A- H09 220 927
- JP-A- H09 220 927
- JP-A- 2003 011 658
- JP-A- 2003 011 658
- JP-A- 2004 034 734
- JP-A- 2004 034 734
- JP-A- 2004 142 713
- JP-A- 2010 179 879
- JP-U- 3 168 831

## Description

### Field of Technology

The present invention relates to an airflow-direction adjustment device varying an airflow amount or a flow direction of air blown out from a blowout port to an outside by a louver in a cooling and heating equipment, air conditioning equipment, or the like, according to the preamble of claim 1.

### Background Art

Figs. 12(a) and 12(b) show an airflow-direction adjustment device for a vehicle (ventilator) disclosed in JP 2003 011658 A. This basic structure comprises an inner case (corresponding to a housing of the present application) CI including a blowout port 23; and a louver 25 turnably supported on an inner side of the inner case CI. Also, the louver 25 can open and close the blowout port 23, and varies a flow amount or a flow direction of air flowing through the blowout port 23 by a degree of opening and closing. Also, as for an essential portion, between the blowout port 23 and the louver 25, there is provided a locking device elastically locking the louver 25 in a fully closed position while providing a shut-feeling (fully closed feeling) to an operator.

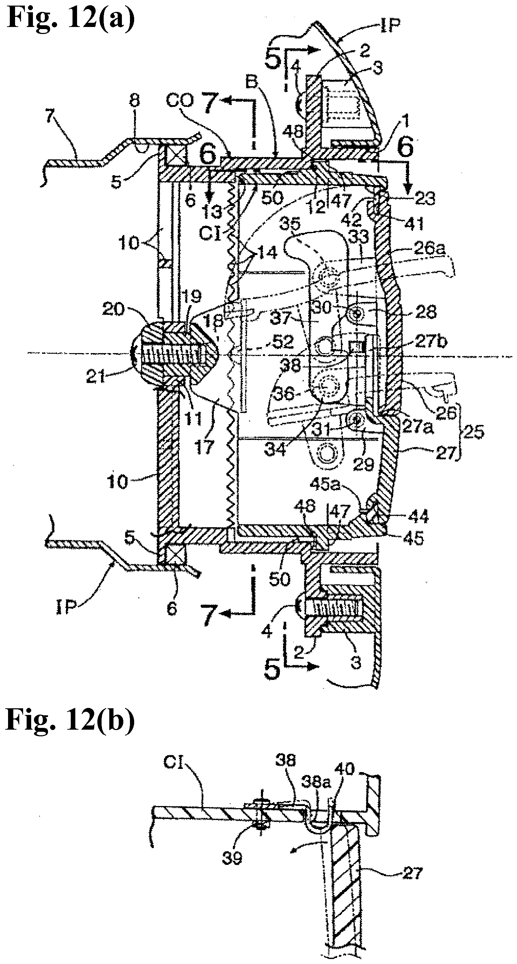

As shown in Fig. 12 (b), the locking device comprises a shut spring 38, and a base portion is bolted at a portion shown with reference numeral 39 to a side wall of the inner case IC. Also, a free-end portion 38a with a U-shaped cross section extending from the base portion passes through a window hole 40 bored on the inner case side wall, and protrudes to an inner side of the side wall, i.e. to a lower-portion plate (corresponding to a fin of the present application) 27 side forming the louver 25. Then, as for an operational characteristic, when the lower-portion plate 27 moves to the fully closed position from a position slightly before fully closed, a side-face edge portion of the lower-portion plate 27 engages the shut spring 38 while pressing the free-end portion 38a to elastically lock the lower-portion plate 27 in a fully closed state.

Incidentally, in Fig. 12(a), reference alphabet CO represents an outer case turnably supporting the inner case IC inwardly. Between both cases, there is provided a moderation holding device elastically holding the inner case IC in a turning position with a moderate feeling. The moderation holding device comprises a wavy concave-convex piece 14 provided around an inner peripheral step face 13 of the outer case CO; and a moderation piece 5 provided in the inner case IC and always elastically engaging one portion of the concave-convex piece 14.

### Prior Art Document

### Patent Document

Patent Document 1: Japanese Unexamined Patent Application Publication JP 2003 011658 A.
JP 2004 034734 A discloses an airflow-direction adjustment device for a vehicle comprising an elastic piece used to hold a louver.

### Summary of the Invention

### Problems to be Solved by the Invention

In the structure of the aforementioned JP 2003 011658A, in a fully closing operation of the louver, when the lower-portion plate is elastically locked in a free end portion of the shut spring, a spring force of the shut spring can provide the shutting feeling to an operator. However, in the structure, the shut spring and a bolt are used so as to increase the number of components and a cost, and the small shut spring has to be bolted so as to increase the number of operations, or an attachment space is secured so as to restrict the flexibility of design.

An object of the present invention is to solve the aforementioned problems, and especially with maintaining a simplified structure without increasing a weight to the utmost, an operator can feel a full closing time by a click feeling, and additionally, in a fully closed state of the louver, the generation of an unpleasant sound due to a vibration applied from a vehicle body side can be suppressed. Other objects of the present invention will be clarified in the following explanation of contents.

### Means for Solving the Problems

In order to obtain the aforementioned objects, an airflow-direction adjustment device for a vehicle with the features of claim 1 is provided. The present invention is an airflow-direction adjustment device for a vehicle comprising a housing including a blowout port; and a louver turnably supported on an inner side of the housing, and the louver can open and close the blowout port and varies a flow amount or a flow direction of air flowing through the blowout port by a degree of opening and closing. Also, the airflow-direction adjustment device includes a plate attached to the inner side of the housing and provided with a shaft hole fitting and pivotally supporting a support shaft of the louver, and a control device elastically locking the louver in a fully closed position.

In the aforementioned structure, the "housing" includes the louver turnably supported on the inner side, and the louver has a structure of varying the flow amount and the flow direction of the air flowing through the blowout port of the housing. The housing generally has a cylinder shape, and for example, there is a case wherein the housing is incorporated into an outer case, or turnably incorporated relative to the case as well. The "louver" is formed by a single fin or a plurality of fins, and a type including the support shaft fitting into the shaft hole provided on a housing side relative to the housing.

When the control device is a simple convex shape, i.e. a convex shape with a step rigid member in a plate part, for example, a gap between the plate and the louver increases, or an elastic locking force or an operation load easily becomes excessive, so that there is a possibility of declining a click feeling or the generation of scraping chips after repetitive use. In order to efficiently prevent the aforementioned possibility, the airflow-direction adjustment device for the vehicle according to the present invention is preferably formed with the following aspect.

According to the invention, the plate includes a plate portion which is displaceable through a pair of slits, and the control device includes a projection provided in the plate portion. An optimal elastic locking force can be provided without increasing the operation load.

The aforementioned projection can pressure-contact a side portion of the louver. According to the preferred aspect, a louver side portion usually includes a flat portion which can be easily interposed with an inside face of the housing since the louver side portion is provided with the support shaft, so that it is reasonable to use the flat portion thereof as a portion which pressure-contacts each projection to maintain simplicity.

The louver is formed by the plurality of fins, and the plate includes the shaft holes with a number corresponding to the number of the fin. According to the preferred aspect, the louver is formed by the plurality of fins so as to set an adjustment of an airflow amount or an airflow direction more variously, and the plurality of shaft holes is simultaneously formed in the plate so as to easily secure an interval accuracy between the shaft holes as well.

### Effect of the Invention

In the present invention, there are provided the shaft hole fitting the support shaft of the louver into the plate attached to the inner side of the housing; and the control device elastically locking the louver in the fully closed position so as to excel in the following respects compared to JP 2003 011658A.
(A) In the plate of the present invention, the shaft hole and the control device can be easily and accurately added to the housing side without increasing the weight only by providing the plate in such a way as to form one portion of the housing.
(B) Simultaneously, a projecting portion formed in the housing can be kept minimum, and the plate can be easily attached to the housing by one-touch operation.

### Brief Description of the Drawings

Figs. 1(a) and 1(b) show an airflow-direction adjustment device according to the first embodiment of the present invention, wherein Fig. 1(a) is an external view in a fully closed state of a louver; and Fig. 1(b) is an external view in a fully open state of the louver.
Figs. 2(a) to 2(c) show details of the airflow-direction adjustment device, wherein Fig. 2(a) is a top view; Fig. 2(b) is a rear view; and Fig. 2(c) is a side view.
Fig. 3 is a cross-sectional view taken along a line A-A in Fig. 2(a).
Fig. 4 is a cross-sectional view showing a condition switched from the fully closed state to the fully open state of the louver in Fig. 3.
Fig. 5(a) is a cross-sectional view taken along a line B-B in Fig. 3; and Fig. 5(b) is a cross-sectional view taken along a line C-C in Fig. 4.
Fig. 6 is a partially exploded cross-sectional view showing a relationship of structural members of the aforementioned airflow-direction adjustment device.
Fig. 7(a) is an external view of a housing as a single item; and Fig. 7(b) is a cross-sectional view taken along a line D-D in Fig. 7(a) (however, a plate is attached to the housing).
Figs. 8(a) to 8(e) are single item drawings of the aforementioned plate, wherein Fig. 8(a) is a front view; Fig. 8(b) is a rear view; Fig. 8(c) is a side view; Fig. 8(d) is a cross-sectional view taken along a line F-F in Fig. 8(a); and Fig. 8(e) is a cross-sectional view taken along a line G-G in Fig. 8(c).
Fig. 9(a) is a schematic cross-sectional view showing a control device in an open state of the louver; and Fig. 9(b) is a schematic cross-sectional view showing an operation of the control device in the fully closed state of the louver.
Figs. 10(a) and 10(b) show the first modified example of a control device, which belongs to a non-inventive device, wherein Fig. 10(a) and Fig. 10(b) are a front view and a rear view of the plate.
Figs. 11(a) and 11(b) are schematic cross-sectional views showing a second modified example of a control device corresponding to Figs. 9(a) and 9(b) which belongs to a non-inventive device.
Figs. 12(a) and 12(b) are explanatory drawings (shown as Fig. 4 and Fig. 9 in Patent Document 1) showing a structure of Patent Document 1.

### Best Modes of Carrying out the Invention

Hereinafter, preferred embodiments of the present invention will be explained with reference to the attached drawings. In the explanation, after a structure of an airflow-direction adjustment device according to the preferred embodiment of the present invention is described in detail, the airflow-direction adjustment device according to the preferred embodiment of the present invention will be clarified in the order of operation characteristics, the first modified example, and a second modified example.

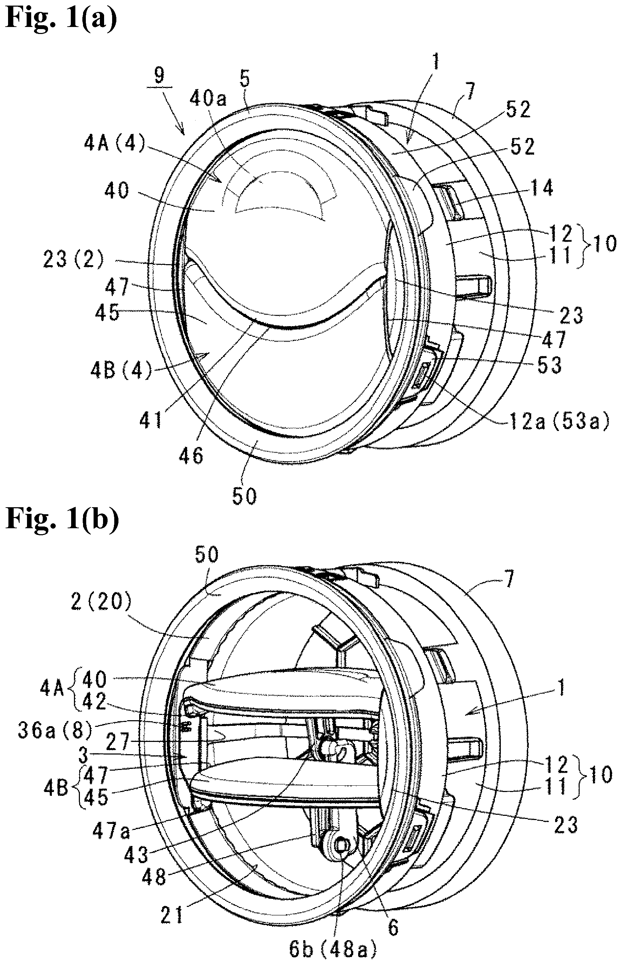

(Structure) As shown in Figs. 1(a) and 1(b), Fig. 3, Fig. 4, and Fig. 6, as for a structural characteristic, for example, an airflow-direction adjustment device 9 of an embodiment shown in Fig. 1(a) to Fig. 9(b) comprises a case 1 attached to an attachment hole opened in an instrument panel IP of an automobile; a housing 2 including a blowout port 2a turnably supported on an inner side of the case 1; a plate 3 attached to inner faces on both sides of the housing 2, and provided with shaft holes 32a and 33a, and a later-described control device 8; a louver 4 formed by a plurality of fins 4A and 4B turnably supported in a state wherein support shafts 47 and 49 are fitted and pivotally supported in the shaft holes 32a and 33a of the plate 3; a link 6 connecting the fins to be capable of being associated; and a decorative frame 5 mounted on a front side of the case 1.

Incidentally, a blowout duct of a cooling and heating equipment, or air conditioning equipment not shown in the drawings is connected to a back side of the case 1. Then, air conditioning air sent through the blowout duct is discharged into a vehicle interior through the blowout port 2a of the housing 2 from inside of the case 1. The reference numeral 7 shown in Fig. 1(a) to Fig. 6 represents a packing maintaining an adhesion property when the blowout duct is connected to the case 1. Also, the case 1, the housing 2, the plate 3, the fins 4A and 4B, the decorative frame 5, and the link 6 are resin molded articles.

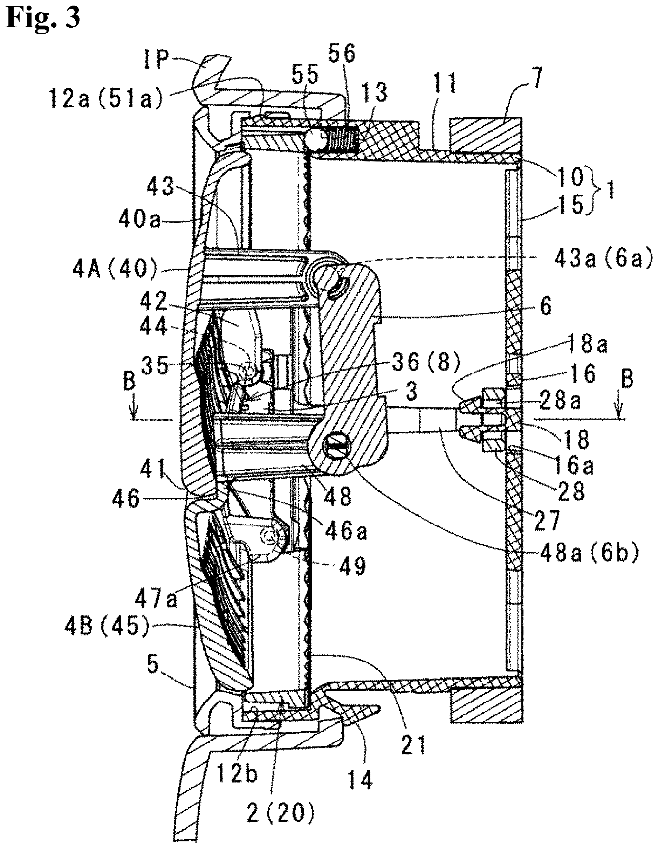

As for the operation characteristics, the fins 4A and 4B (louver 4) are operated to turn so as to open and close the blowout port 2a, or vary a flow amount or a flow direction of air flowing through the blowout port 2a by changing a degree of opening and closing (see Figs. 1(a) and 1(b)); the flow direction of the air can be further varied by operating the housing 2 to turn relative to the case 1; the fins 4A and 4B (louver 4) are elastically locked in a fully closed position accompanied by a click feeling by the control device 8 (see Fig. 3); a ball 55 urged by a spring member 56 provided in the case 1 is included, and the ball 55 is always elastically pressure-contacted against a concave-convex piece 21 provided on a whole circumference of a back end of the housing 2 so as to hold the housing 2 at a desired turning position with a feeling of moderation; and the like. Hereinafter, details of the aforementioned structure and operation will be clarified.

In the case 1, a cylindrical main member 10 incorporating the housing 2 includes a lattice shape portion 15 on an inner side of a back end (see Fig. 3). In an outer periphery of the cylindrical main member 10, a back portion (a side separated from the vehicle interior, hereinafter, the same) 11 has a diameter slightly smaller than that of a front portion (an inner side of the vehicle interior, hereinafter, the same) 12 incorporating the housing 2. The front portion 12 includes a plurality of locking claws 12a provided in an outer periphery and attaching the decorative frame 5; a placement portion 12b provided in an inner periphery and turnably holding the housing 2; and a hollow portion 13 provided on a deep side of the placement portion 12b and placing the spring member 56.

The back portion 11 includes a plurality of engagement piece portions 14 protruded on a step end face, and engaging an attachment hole edge side of the instrument panel IP as shown in Fig. 3. The lattice shape portion 15 includes a disk portion 16 provided at a center; and a clip portion 18 provided to stand on an inner face of the disk portion 16. The clip portion 18 is provided to be capable of reducing a diameter through a gap, and forms an engaging claw 18a projecting one step at a tip.

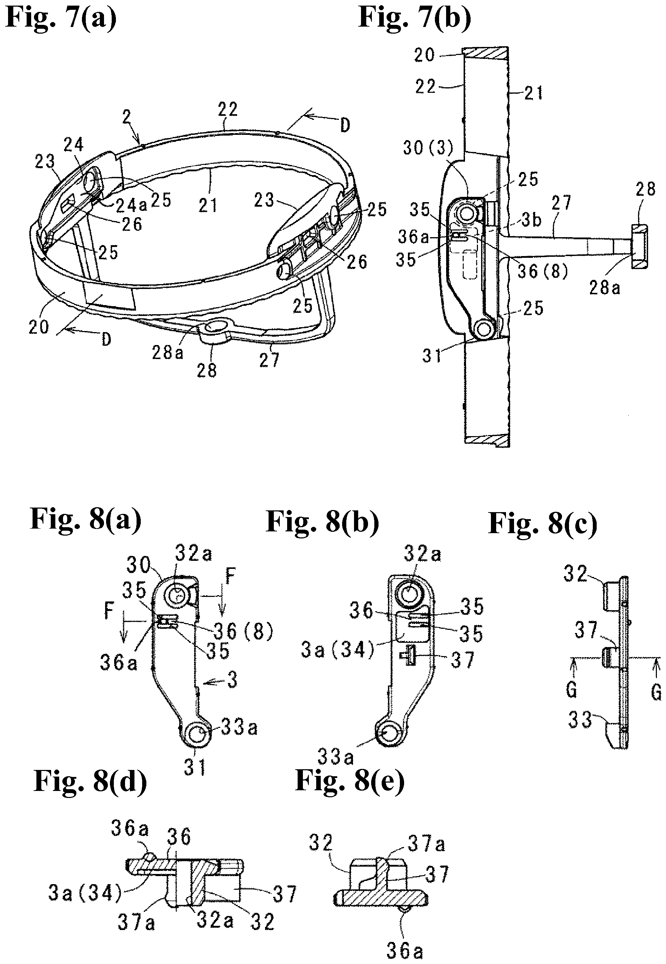

As shown in Figs. 7(a) and 7(b), the housing 2 includes a cylindrical main member 20 turnably supporting the louver 4 on an inner side; the wavy concave-convex piece 21 provided on the whole circumference of the back end of the cylindrical main member 20; projection portions 23 provided to face each other on both sides of the cylindrical main member 20, and protruding to an outside more than a front end 22; cavity portions 24 provided on an inner side of the respective projection portions 23, and placing the plate 3; and an approximately U-shaped support leg portion 27 provided to project to a back side of the housing 2 in a state connected to a back side of the respective projection portions 23.

As shown in Fig. 1(a), the projection portion 23 is provided in such a way as to continue to the louver 4, i.e. the fins thereof in a fully closed state of each fin 4A and 4B supported in the cylindrical main member 20 to be openable and closable. The cavity portion 24 has an approximately rectangular shape long in a circumferential direction, and an inner face is set in an attachment face 24a of a flat face (see Fig. 7(a)). The attachment face 24a includes two circular attachment holes 25 provided on both end sides in the circumferential direction; and a rectangular attachment hole 26 provided between the attachment holes 25. On the other hand, the support leg portion 27 includes a ring portion 28 wherein both ends of a U shape are connected to the respective projection portions 23, and provided at an intermediate portion of the U shape.

The plate 3 includes a concaved portion 3a abutting against the attachment face 24a of the cavity portion 24 on a housing side with a gap, and also includes a plate portion 36 which is displaceable through a pair of slits 35 and 35 provided in a thin plate portion 34 of the concaved portion 3a; and a projection 36a provided in the plate portion 36 (see Fig. 8(a) to Fig. 8(e)).

In other words, as shown in Fig. 8(a) to Fig. 8(e), the plate 3 has a shape which fits into the cavity portion 24 and becomes one face with an inner face of the projection portion 23. The plate 3 is provided with the concaved portion 3a wherein one portion of a rear face has a cavity shape; the shaft hole 32a on one end 30 side; the shaft hole 33a on the other end 31 side; cylinder portions 32 and 33 protruded on a rear face and passed through the shaft holes 32a and 33a on the same shaft lines; the thin plate portion 34 thinned by a cavity of the concaved portion 3a; the pair of slits 35 passed through the thin plate portion 34 in parallel; the plate portion 36 positioned between the slits 35 to be capable of oscillating and being displaced; the projection 36a protruding at one portion of the plate portion 36; and an engagement piece portion 37 protruded near an intermediate portion of the rear face and including an engagement claw 37a at a tip.

The aforementioned plate 3 is mounted relative to the cavity portion 24 on the housing side in a state wherein the corresponding cylinder portions 32 and 33 are fitted into the respective attachment holes 25, and the engagement claw 37a of the engagement piece portion 37 is engaged with the attachment hole 26 and retained. This attachment operation can be carried out in a single operation. The plate 3 becomes one face state with the inner face of the projection portion 23 of the housing in a mounted state thereof.

Also, the housing 2 wherein the plate 3 is mounted is placed in the placement portion 12b on a case side from that state, or a state supporting the later-described louver 4, and the support leg portion 27 is turnably engaged by the claw 18a of the clip portion 18 on the case side and a hole 28a of the ring portion 28 so as to be turnably supported relative to the case 1. At that time, the spring member 56 urging the ball 55 is placed in the hollow portion 13 on the case side to pressure-contact the urged ball 55 relative to the concave-convex piece 21.

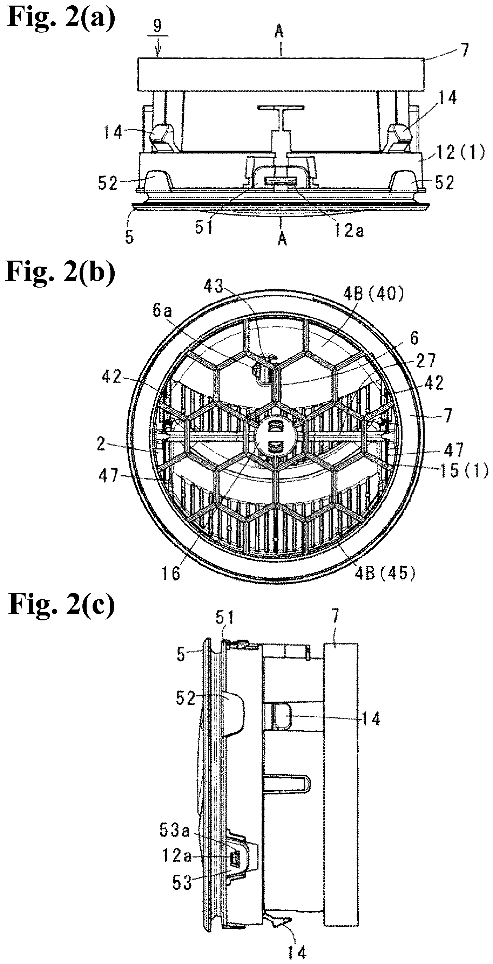

The decorative frame 5 fringes a front side of the blowout port 2a on the housing side so as to make an external appearance excellent, and an outline shape has a ring shape covering a case front end (see Figs. 1(a) and 1(b)). The decorative frame 5 includes an inclined end face 50 which is a design face; a plurality of tongue piece portions 52 projected at a back edge 51 to internally control the outer periphery of the front portion 12 on the case side; and a plurality of tongue piece portions 53 projected at the back edge 51 likewise, and including a hole 53a engaging the locking claw 12a provided in the front portion 12 (see Figs. 2(a) and 2(c)). Then, the decorative frame 5 is attached to the case 1 by an engagement at a plurality of portions between the locking claw 12a and the hole 53a of the tongue piece portion 53.

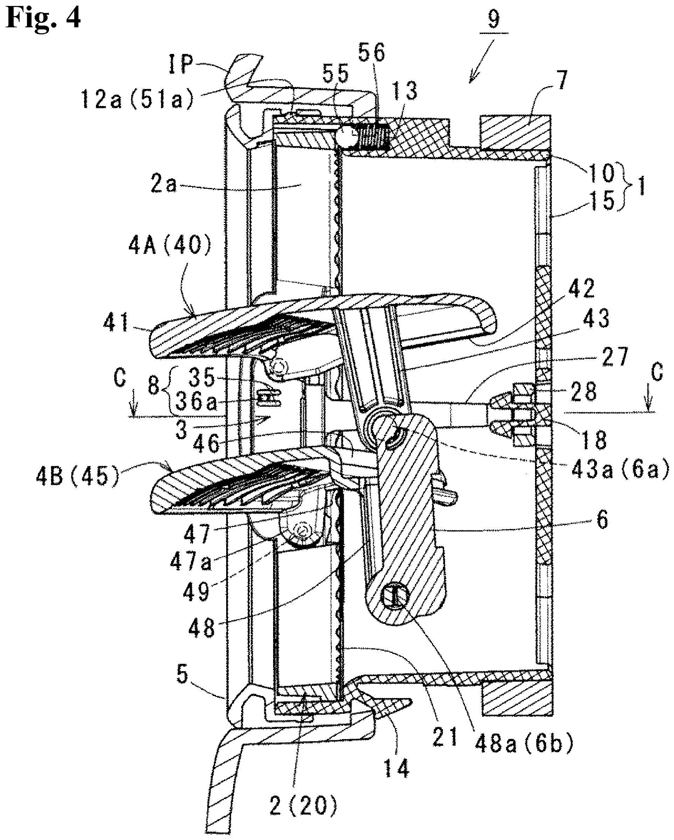

The louver 4 is formed by two pieces of the upper fin 4A and the lower fin 4B, and the link 6 associating the upper and lower fins (see Fig. 1(b)). Among those, the upper and lower fins 4A and 4B have a shape so as to fully close the blowout port 2a of the housing 2 in a state placed in an up-and-down direction as shown in Fig. 1(a) and Fig. 3, and to fully open the blowout port 2a by opening the blowout port 2a at the maximum in a state placed in parallel to each other or horizontally as shown in Fig. 1(b) and Fig. 4.

Namely, as shown in Fig. 3, the upper fin 4A includes a main portion 40; a lower edge portion 41 which becomes a lower fin 4B side in the fully closed state; side portions 42 projecting support shafts 44 on both sides of the main portion 40; and an arm portion 43 provided to stand on a rear face of the main portion 40. In the fully closed state, in the main portion 40, an upper side comes close to an inner face of the cylindrical main member 20 of the housing 2, and the lower edge portion 41 comes close to the later-described upper edge portion 46 of the lower fin 4B. Also, on an outer face of the main portion 40, there is provided a portion 40a which is shallowly engraved. The portion 40a is a mark suggesting a portion to be pressed when the louver 4 or the upper fin 4A is pressed to be switched in an open direction from the fully closed state. The support shafts 44 of both side portions 42 are provided on the same shaft line, and fitted into the corresponding shaft holes 32a and 33a on a plate side mounted on the housing 2. The arm portion 43 forms a connection hole 43a laterally on a protruding end side.

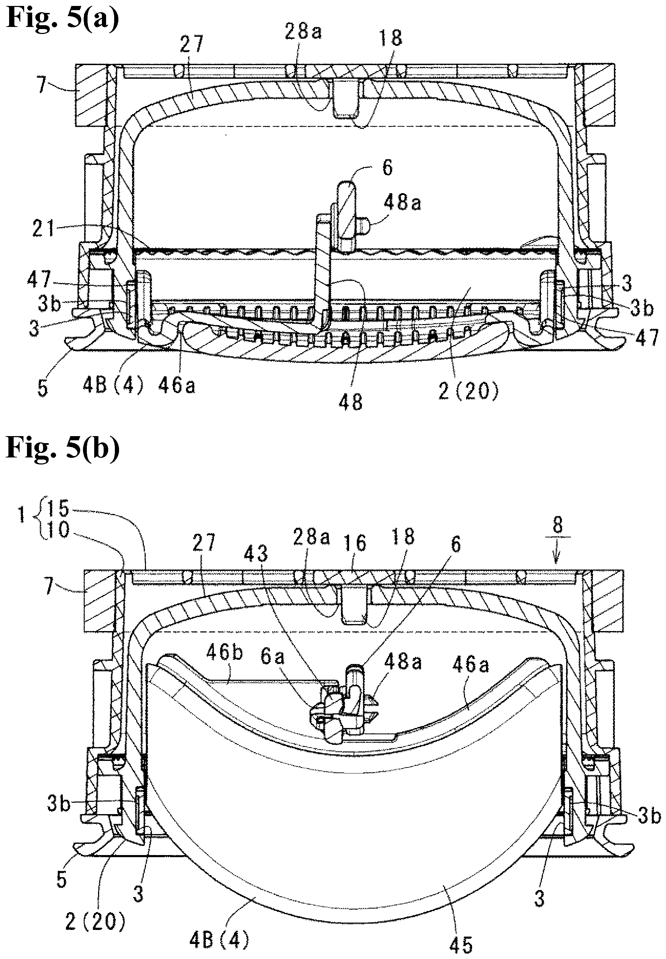

The lower fin 4B includes a main portion 45; the upper edge portion 46 having a step shape when the upper edge portion 46 is located on an upper fin 4A side in the fully closed state; side portions 47 projecting the support shafts 49 on both sides of the main portion 45; and an arm portion 48 located on a rear face of the main portion 45, and provided in an end portion 46b by making one side of the upper edge portion 46 the wide end portion 46b as shown in Fig. 5(b). In the fully closed state, in the main portion 45, a lower side comes close to the inner face of the cylindrical main member 20 of the housing 2, and the upper edge portion 46 receives the lower edge portion 41 of the upper fin 4A at an end portion 46a having a step shape. The support shafts 49 of both side portions 47 are provided on the same shaft line, and fitted into the corresponding shaft holes 33a on the plate side mounted on the housing 2. When the louver 4 or the lower fin 4B is switched from the opening state to the fully closed state, each side portion 47 faces the corresponding plate 3, and is elastically locked in the projection 36a of the plate portion 36 which is displaceable accompanied by the click feeling. As a result, the lower fin 4B is elastically held in the fully closed state.

Incidentally, in the upper fin 4A, the lower edge portion 41 abuts against the end portion 46a of the upper edge portion 46 of the lower fin 4B, so that unexpected oscillation is controlled due to a presence of the aforementioned elastically held lower fin 4B. The arm portion 48 includes a clip portion 48a projected on one side face of a tip (see Fig. 1(b), Fig. 4, and Fig. 6). The clip portion 48a is provided to be capable of reducing a diameter through a gap, and forms an engaging claw projecting one step at the tip.

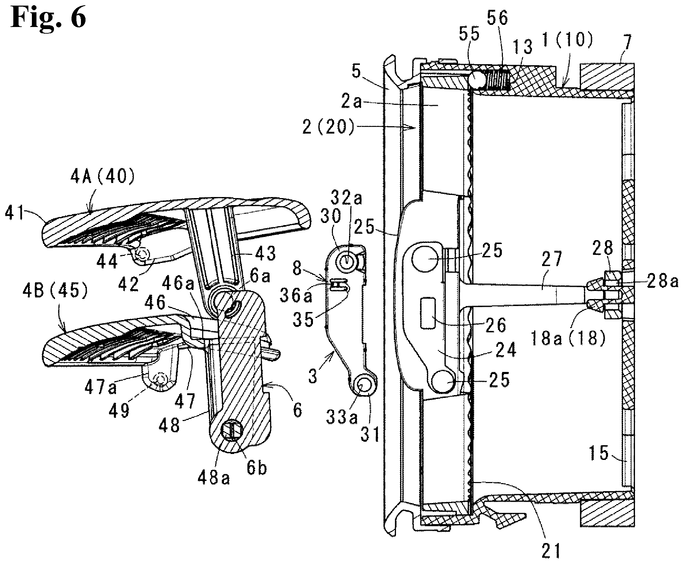

The link 6 includes a clip portion 6a provided on an upper end side, and a connection hole 6b provided on a lower end side (see Fig. 6). The clip portion 6a is provided to be capable of reducing a diameter through a gap as with the clip portion 18 or 48a, and forms an engaging claw projecting one step at a tip. Then, the aforementioned link 6 fits the clip portion 6a on the upper end side into the connection hole 43a of the arm portion 43 on an upper fin side, and fits the clip portion 48a of the arm portion 48 on a lower fin side relative to the connection hole 6b on the lower end side. Thereby, the link 6 is associated with the upper fin 4A which turns around the support shafts 44 and the lower fin 4B which turns around the support shafts 49 to allow the upper fin 4A and the lower fin 4B to open and close.

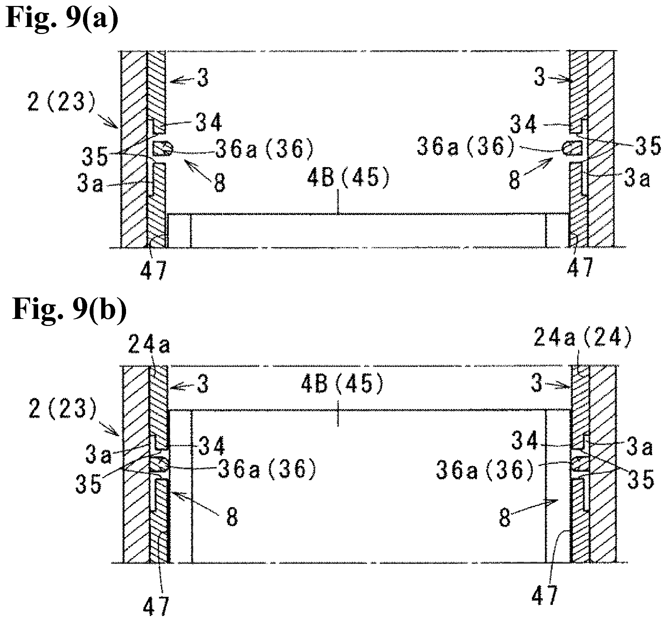

(Operations) Hereinafter, main operations of the airflow-direction adjustment device 9 made as mentioned above will be described.
(1) Fig. 1(b), Fig. 4, and Fig. 5(b) are a fully open state wherein the upper and lower fins 4A and 4B become approximately parallel to each other. In the fully open state, the arm portion 43 of the upper fin 4A and the arm portion 48 of the lower fin 4B are placed approximately in the up-and-down direction through the link 6 (see Fig. 4). Then, air blown out from the blowout port 2a to an outside (inside the vehicle interior) is maximum in flow amount, and becomes a parallel air-blowing mode.
(2) From the aforementioned fully open state, for example, when a user pinches the upper fin 4A and operates to turn, it is possible to rotate the housing 2 itself relative to the case 1 at an arbitrary angle. An air-blowing aspect of the air blown out from the blowout port 2a varies according to a rotation angle thereof when the housing 2 is rotated. Also, in this turning operation, the ball 55 urged by the spring member 56 is always elastically pressure-contacted against the concave-convex piece 21 at the back end of the housing 2 so as to turn with the feeling of moderation, and furthermore, when the turning halts, the housing 2 is elastically held at a turning position thereof.
(3) Naturally, from the aforementioned fully open state, for example, the user pinches the upper fin 4A to turn downwardly, or turn upwardly to an arbitrary open state so as to change the flow amount and the flow direction of the air blown out from the blowout port 2a. Namely, in the structure, when the upper fin 4A is pinched to turn downwardly only for a predetermined amount, the lower fin 4B synchronizes the upper fin 4A through the link 6 as well to turn in the same direction, so that the air blown out from the blowout port 2a becomes a downward air-blowing mode. Contrarily, when the upper fin 4A is pinched to turn upwardly only for a predetermined amount, the lower fin 4B synchronizes the upper fin 4A through the link 6 as well to turn in the same direction, so that the air blown out from the blowout port 2a becomes an upward air-blowing mode.
(4) From the aforementioned open state or fully open state, for example, when the upper fin 4A is pinched to largely turn downwardly, the lower fin 4B synchronizes the upper fin 4A through the link 6 as well to turn in the same direction so as to be ultimately switched to the fully closed state wherein the upper and lower fins 4A and 4B (louver 4) are placed in the up-and-down direction to close the blowout port 2a. Fig. 1(a), Figs. 2(a) to 2(c), Fig. 3, and Fig. 5(a) show the fully closed state thereof. In this structure, a pressure contact force (click feeling) of the projection 36a forming the aforementioned control device 8 is received from a point just before the fully closed state. Namely, in the control device 8, when the upper and lower fins 4A and 4B (louver 4) turn in a state wherein the support shafts 44 and 49 thereof fit into the shaft holes 32a and 33a, and are switched to the fully closed position, the control device 8 abuts against the side portions 47 of the lower fin 4B to elastically lock the lower fin 4B. Fig. 9(a) shows a state wherein the lower fin 4B is located slightly before the fully closed position, and Fig. 9(b) shows a state wherein the lower fin 4B comes to the fully closed position, and the projection 36a pressure-contacts the side portions 47 of the lower fin 4B accompanied by an elastic displacement of the plate portion 36 so as to be elastically locked. In the projection 36a, within the thin plate portion 34, the plate portion 36 located between the slits 35 is displaced inside a space of the concaved portion 3a, and pressure-contacts the side portions 47 by the displacement force. Incidentally, in the upper fin 4A, the lower edge portion 41 abuts against the end portion 46a of the upper edge portion 46 of the lower fin 4B and the like so as to control the unexpected oscillation due to the presence of the elastically held lower fin 4B.
(5) In other words, in the aforementioned structure, turning tracks of the upper and lower fins 4A and 4B (louver 4) are located on a circle around the shaft holes 32a and 33a, and the projection 36a provided in the displaceable plate portion 36 forming the control device 8 is provided in the same plate 3 together with the shaft holes 32a and 33a, so that the side portions 47 of the lower fin 4B wherein the projection 36a hits can be set accurately relative to the projection 36a so as to easily maintain an optimal value for an elastic locking force or an operation load. Moreover, in detail, in the control device 8, the plate 3 includes the concaved portion 3a abutting against the attachment face 24a of the cavity portion 24 on the housing side with the gap, so that even if the plate 3 is attached to the housing 2 as one face, the plate portion 36 which is displaceable through the pair of slits 35 provided in the thin plate portion 34 of the concaved portion 3a can be set. Then, in the structure, the projection 36a for elastically locking is provided in the displaceable plate portion 36 positioned between the slits 35, so that without increasing the operation load, an optimal elastic locking force can be provided. Naturally, the aforementioned plate 3 excels in that the shaft holes 32a and 33a, and the control device 8 can be simply and accurately added to the housing 2 without increasing a weight only by adding in such a way as to form one portion of the housing 2, and the plate 3 can be attached to the housing 2 as mentioned above in the single operation as well.

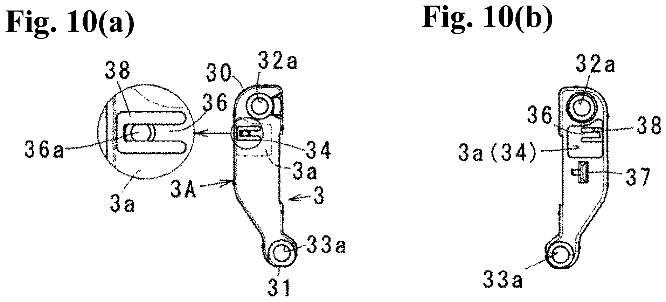

(First modified example) The non-inventive first modified example in Figs. 10(a) and 10(b) shows one example wherein a structure of the aforementioned pair of slits 35 is modified to a single slit 38 in response to Figs. 8(a) and 8(b). In this explanation, the same reference signs are assigned to portions same as or similar to the aforementioned embodiment, and only changes will be described.

A plate 3A of the first modified example forms the plate portion 36 to be capable of oscillating and being displaced by providing the slit 38 having an approximately U shape in the thin plate portion 34 of the concaved portion 3a. The plate portion 36 is provided in a cantilever state by the slit 38 so as to easily oscillate and be displaced compared to the plate portion 36 between the aforementioned slits 35. Consequently, the first modified example secures the plate portion 36 which is displaceable through the single slit 38 having the approximately U shape and the like in the cantilever state, and provides the projection 36a for elastically locking in the plate portion 36 thereof so as to provide an elastic locking force lighter than that of the aforementioned embodiment.

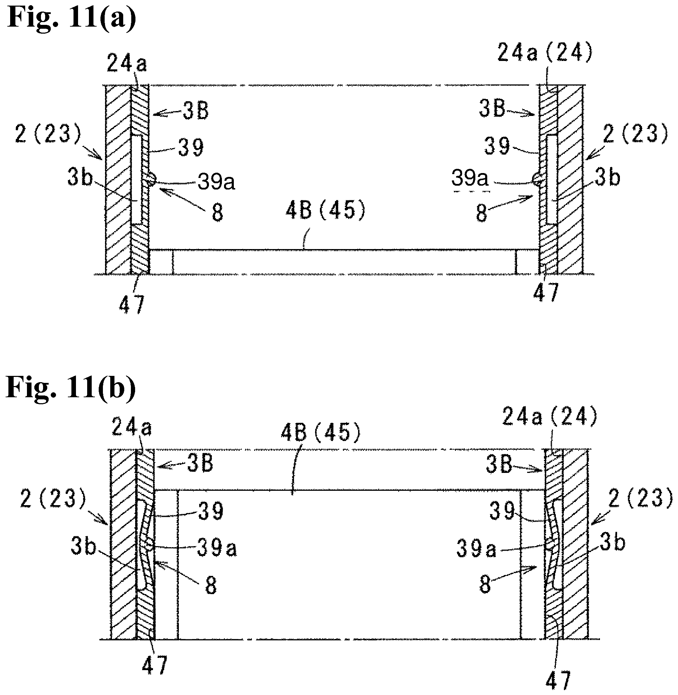

(Second modified example) The non-inventive second modified example in Figs. 11(a) and 11(b) shows one example modified to a structure wherein the slit itself is not provided relative to the structure of the aforementioned pair of slits 35 or a structure of the single slit 38 in response to Figs. 9(a) and 9(b). In this explanation as well, the same reference signs are assigned to portions same as or similar to the aforementioned embodiment, and only changes will be described.

A plate 3B of the second modified example is the same as the aforementioned embodiment or the first modified example in that the plate 3B includes a concaved portion 3b abutting against the attachment face 24a of the housing 2 with the gap; however, a thin plate portion 39 forming the concaved portion 3b is formed thinner than a displaceable thickness, i.e. the aforementioned thin plate portion 34. Then, in the second modified example, a projection 39a is provided in the displaceable thin plate portion 39, so that as shown in Fig. 11(b), the projection 39a pressure-contacts the side portion 47 of the lower fin 4B accompanied by a displacement of the thin plate portion 39 so as to elastically lock the lower fin 4B. In a case of the second modified example as well, even if the plate 3B is attached to the housing 2 in the same plane, the projection 39a for elastically locking is provided in the displaceable thin plate portion 39 so as to provide an appropriate elastic locking force more easily compared to the aforementioned embodiment or the first modified example. Namely, in the displaceable plate portion 36 in Figs. 9(a) and 9(b), and Figs. 10(a) and 10(b), and with the projection 39a provided in the displaceable thin plate portion 39 in Figs. 11(a) and 11(b), the elastic locking force or the operation load easily becomes excessive compared to a simple convex shape which does not have the displaceable plate portion, and even after repetitive use, there is no possibility of a decline of the click feeling or the generation of scraping chips, and additionally, there is an advantage that a gap between the plate and a side face of the louver can be reduced.

Incidentally, in the airflow-direction adjustment device of the present invention, details can be modified or developed with reference to the aforementioned explanation provided that they comprise the structures defined in the appended claims As for one example, there is shown the structure wherein the housing is turnably supported relative to the case; however, a case corresponding portion may be integrally formed in the housing, or be supported in the case non-turnably.

### Explanation of Symbols

1 ... a case (10 is a cylindrical main member, and 15 is a lattice shape portion.)
2 ... a housing (2a is a blowout port, and 20 is a cylindrical main member.)
3 ... a plate (3a is a concaved portion, and 32a and 33a are shaft holes.)
3A ... a plate (3a is a concaved portion, and 32a and 33a are shaft holes.)
3B ... a plate (3b is a concaved portion, and 32a and 33a are shaft holes.)
4 ... a louver
4A ... an upper fin (42 is side portions, and 44 is support shafts.)
4B ... a lower fin (47 is side portions, and 49 is support shafts.)
5 ... a decorative frame
6 ... a link
7 ... a packing
8 ... a control device
9 ... an airflow-direction adjustment device
24 ... a cavity portion (24a is an attachment face.)
27 ... a support leg portion (28 is a ring portion.)
34 ... a thin plate portion
35 ... a slit
36 ... a displaceable plate portion (36a is a projection.)
38 ... a slit
39 ... a displaceable thin plate portion (39a is a projection.)
43 ... an arm portion of the upper fin (43a is a clip portion.)
48 ... an arm portion of the lower fin (48a is a connection hole.)
IP ... an instrument panel

## Claims

1. An airflow-direction adjustment device (9) for a vehicle, comprising a housing (2) including a blowout port (2a), and a louver (4) turnably supported on an inner side of the housing (2), wherein the louver (4) can open and close the blowout port (2a), and varies a flow amount or a flow direction of air flowing through the blowout port (2a) by a degree of opening and closing,
said airflow-direction adjustment device (9) comprising a plate (3) attached to an inner side of the housing (2) and provided with a shaft hole (32a) engaging and pivotally supporting a support shaft (44) of the louver (4), and a control device (8) elastically locking the louver (4) in a fully closed position,
**characterized in that**
the plate (3) is mounted relative to cavity portion (24) on the housing side in a state wherein corresponding cylinder portions (32, 33) are fitted into respective attachment holes (25), provided on the cavity portion (24), and an engagement claw (37a) of an engagement piece portion (37) protruded on a rear face of the plate (3) is engaged with an attachment hole (26) provided on the cavity portion (24) and retained,
wherein the plate (3) is provided with a concaved portion (3a) wherein one portion of the rear face has a cavity shape; the shaft hole (32a) on one end (30) side; a shaft hole (33a) on the other end (31) side; said cylinder portions (32, 33) protruding on the rear face and passing through the shaft holes (32a, 33a) on the same shaft lines; a thin plate portion (34) thinned by a cavity of the concaved portion (3a); a pair of slits (35) passed through the thin plate portion (34) in parallel; a plate portion (36) positioned between the slits (35) to be capable of oscillating and being displaced; a projection (36a) protruding at one portion of the plate portion (36).

2. An airflow-direction adjustment device for a vehicle according to claim 1, wherein the projection (36a) can pressure-contact a side portion of the louver (4).

3. An airflow-direction adjustment device for a vehicle according to claim 1 or 2, wherein the louver (4) is formed by a plurality of fins (4A, 4B).

4. An airflow-direction adjustment device for a vehicle according to claim 3, wherein the support shafts (44) of both side portions (42) of the louver (4) are provided on the same shaft line, and fitted into the corresponding shaft holes (32a) on a plate side mounted on the housing (2), wherein support shafts (49) of both side portions (47) are provided on the same shaft line, and fitted into the corresponding shaft holes (33a) on the plate side mounted on the housing (2).

## Patentansprüche

1. Luftstromrichtungs-Einstellvorrichtung (9) für ein Fahrzeug, umfassend ein Gehäuse (2) mit einer Ausblasöffnung (2a) und eine Jalousie (4), die drehbar an einer Innenseite des Gehäuses (2) gelagert ist, wobei die Jalousie (4) die Ausblasöffnung (2a) öffnen und schließen kann und eine Strömungsmenge oder eine Strömungsrichtung der durch die Ausblasöffnung (2a) strömenden Luft durch den Grad des Öffnens und Schließens variiert,
wobei die Luftstromrichtungs-Einstellvorrichtung (9) eine Platte (3), die an einer Innenseite des Gehäuses (2) angebracht und mit einem Wellenloch (32a) versehen ist, das mit einer Lagerwelle (44) der Jalousie (4) in Eingriff steht und eine Steuervorrichtung (8) umfasst, die die Jalousie (4) in einer vollständig geschlossenen Position elastisch schließt,
**dadurch gekennzeichnet, dass**
die Platte (3) relativ zu einem Hohlraumabschnitt (24) auf der Gehäuseseite in einem Zustand montiert ist, in dem entsprechende Zylinderabschnitte (32, 33) in jeweilige Befestigungslöcher (25) eingepasst sind, die an dem Hohlraumabschnitt (24) vorgesehen sind, und eine Eingriffsklaue (37a) eines Eingriffsstückabschnitts (37), der an einer hinteren Fläche der Platte (3) vorsteht, mit einem Befestigungsloch (26) in Eingriff steht, das an dem Hohlraumabschnitt (24) vorgesehen und gehalten ist,
wobei die Platte (3) mit einem konkaven Abschnitt (3a) versehen ist, wobei ein Abschnitt der Rückseite eine Hohlraumform aufweist; das Wellenloch (32a) auf der Seite eines Endes (30); ein Wellenloch (33a) auf der Seite des anderen Endes (31); wobei die Zylinderabschnitte (32, 33) auf der Rückseite vorstehen und durch die Wellenlöcher (32a, 33a) auf denselben Wellenachsen verlaufen; einen dünnen Plattenabschnitt (34), der durch einen Hohlraum des konkaven Abschnitts (3a) dünner gemacht ist; ein Paar Schlitze (35), die parallel durch den dünnen Plattenabschnitt (34) verlaufen; einen Plattenabschnitt (36), der zwischen den Schlitzen (35) so angeordnet ist, dass er oszillieren und verschoben werden kann; einen Vorsprung (36a), der an einem Abschnitt des Plattenabschnitts (36) vorsteht.

2. Luftstromrichtungs-Einstellvorrichtung für ein Fahrzeug nach Anspruch 1, wobei der Vorsprung (36a) mit einem Seitenabschnitt der Jalousie (4) in Druckkontakt treten kann.

3. Luftstromrichtungs-Einstellvorrichtung für ein Fahrzeug nach Anspruch 1 oder 2, wobei die Jalousie (4) durch eine Vielzahl von Rippen (4A, 4B) gebildet ist.

4. Luftstromrichtungs-Einstellvorrichtung für ein Fahrzeug nach Anspruch 3, wobei die Lagerwellen (44) beider Seitenabschnitte (42) der Jalousie (4) auf der gleichen Wellenachse vorgesehen sind und in die entsprechenden Wellenlöcher (32a) auf einer am Gehäuse (2) montierten Plattenseite eingepasst sind, wobei die Lagerwellen (49) beider Seitenabschnitte (47) auf der gleichen Wellenachse vorgesehen sind und in die entsprechenden Wellenlöcher (33a) auf der am Gehäuse (2) montierten Plattenseite eingepasst sind.

## Revendications

1. Dispositif de réglage de direction de flux d'air (9) pour un véhicule, comprenant un boîtier (2) comportant un orifice de soufflage (2a) et un volet d'aération (4) supporté en rotation sur un côté intérieur du boîtier (2), en ce que le volet d'aération (4) peut ouvrir et fermer l'orifice de soufflage (2a), et varie une quantité de flux ou une direction de flux d'air circulant à travers l'orifice de soufflage (2a) par un degré d'ouverture et de fermeture,
ledit dispositif de réglage de direction de flux d'air (9) comprenant une plaque (3) fixée à un côté intérieur du boîtier (2) et comportant un trou d'arbre (32a) entrant en prise et supportant de manière pivotante un arbre de support (44) du volet d'aération (4), et un dispositif de commande (8) fermant élastiquement le volet d'aération (4) dans une position entièrement fermée,
**caractérisé en ce que**
la plaque (3) est montée par rapport à une partie de cavité (24) sur le côté de boîtier une fois que des parties de cylindre (32, 33) correspondantes ont été ajustées dans des trous de fixation (25) respectifs ménagés sur la partie de cavité (24) et une griffe de prise (37a) d'une partie de pièce de prise (37) faisant saillie sur une face arrière de la plaque (3) entre en prise avec un trou de fixation (26) ménagé sur la partie de cavité (24) et retenue,
**en ce que** la plaque (3) comporte une partie concave (3a),
**en ce qu'**une partie de la face arrière présente une forme de cavité ; le trou d'arbre (32a) sur un côté d'extrémité (30) ; un trou d'arbre (33a) sur l'autre côté d'extrémité (31) ; lesdites parties de cylindre (32, 33) faisant saillie sur la face arrière et traversant les trous d'arbre (32a, 33a) sur les mêmes lignes d'arbre ; une partie de plaque mince (34) réduite par une cavité de la partie concave (3a) ; une paire de fentes (35) passée à travers la partie de plaque mince (34) en parallèle ; une partie de plaque (36) positionnée entre les fentes (35) afin de pouvoir osciller et être déplacée ; une saillie (36a) saillant sur une partie de la partie de plaque (36).

2. Dispositif de réglage de direction de flux d'air pour un véhicule selon la revendication 1, en ce que la saillie (36a) peut entrer en contact par pression avec une partie latérale du volet d'aération (4).

3. Dispositif de réglage de direction de flux d'air pour un véhicule selon la revendication 1 ou 2, en ce que le volet d'aération (4) est formé par une pluralité d'ailettes (4A, 4B).

4. Dispositif de réglage de direction de flux d'air pour un véhicule selon la revendication 3, en ce que les arbres de support (44) des deux parties latérales (42) du volet d'aération (4) sont ménagés sur la même ligne d'arbre et ajustés dans les trous d'arbre (32a) correspondants sur un côté de plaque monté sur le boîtier (2), en ce que des arbres de support (49) des deux parties latérales (47) sont ménagés sur la même ligne d'arbre et ajustés dans les trous d'arbre (33a) correspondants sur le côté de plaque monté sur le boîtier (2).
